# FASCICULE DE BREVET EUROPEEN

(11) **EP 1 056 653 B1**
(45) Date de publication et mention de la délivrance du brevet: **19.12.2001**
(21) Numéro de dépôt: 99900946.7
(22) Date de dépôt: 18.01.1999
(51) Int. Cl.: B65D 47/20, B29C 70/76

(54) **DISTRIBUTEUR MANUEL AUTO-OBTURATEUR**
SELBSTSCHLIESSENDE HANDBETÄTIGBARE AUSTRAGVORRICHTUNG
MANUAL SELF-CLOSING DISTRIBUTOR

(30) Priorité: 22.01.1998 FR 9800667
(43) Date de publication de la demande: 06.12.2000
(73) Titulaire: REXAM SMT, 71700 Tournus (FR)
(72) Inventeur: DUBOIS, Daniel, F-71700 Chardonnay (FR); ROSSIGNOL, Eric, F-71100 Châlon-sur-Saône (FR)
(74) Mandataire: Bertrand, Didier
(86) Numéro de dépôt international: FR9900087
(87) Numéro de publication internationale: WO9937550

(56) Documents cités:
- WO-A-92/12065
- DE-U- 29 508 151

## Description

La présente invention concerne l'industrie du conditionnement et celle du moulage de matières plastiques.

Elle vise plus particulièrement la distribution de substance fluide : liquide, émulsion, gel, notamment cosmétique ou pharmaceutique, amenée par pression dans un conduit d'évacuation dont la sortie est obturée automatiquement, en l'absence de pression, afin d'éviter une détérioration de la substance restant dans le conduit et assurer la propreté de l'orifice d'évacuation. Elle concerne tout spécialement les moyens d'obturation à membrane élastique percée d'une fente.

Au repos, les parois de la fente sont appliquées élastiquement l'une contre l'autre et assurent l'obturation du conduit. Lorsque l'on appuie sur un bouton-poussoir distributeur commandant une valve aérosol ou une pompe, ou si l'on presse un récipient à paroi souple comprimable, tel qu'un tube ou une poche, fermé par un bouchon équipé d'un tel conduit, la substance éjectée sous pression écarte les parois, ou lèvres, de la fente pour être distribuée. Dès que la pression cesse, la fente se referme et obture le conduit d'évacuation.

Un tel dispositif d'obturation automatique est décrit notamment dans le brevet français BOUET N° 1 351 565 dans son application à des tubes ou des flacons souples.

Selon ce brevet, la fente distributrice est découpée dans une paroi mince fermant le goulot et venue de moulage du matériau du récipient. Lorsqu'on veut adapter ce dispositif à un bouton-poussoir ou à un bouchon vissé ou inséré à force dans ou sur le goulot d'un récipient, il faut utiliser pour le corps un matériau résistant aux contraintes mécaniques de la mise en place et de la rétention du bouchon ou de l'actionnement du bouton-poussoir. Un tel matériau ne convient pas aux exigences élastiques de la fente distributrice. On est donc conduit à utiliser deux matériaux différents pour la fente et le corps. On a déjà proposé, par exemple dans les documents EP 0 743 259 A et 0 442 379 A, de réaliser un bouchon de récipient comportant une membrane à fente par un procédé de bi-injection. Cependant, une telle membrane à fente nécessite une configuration très particulière et large du bouchon qui convient bien à la distribution de liquide très visqueux ou de pâte (comme un gel ou une pâte dentifrice), mais qui convient peu à la distribution de substances plus fluides notamment de celles dont la libération est habituellement commandée par un système de type valve aérosol, pour lequel on préfère une buse de distribution constituée d'un passage tubulaire allongé. Une telle buse est, dans l'art antérieur illustré par le document GB 1 472 178, constituée par un passage moulé dans le corps, transversalement à un conduit central axial (coiffant la tige creuse d'actionnement de la valve ou de la pompe), le tout étant réalisé par moulage dans un corps comportant aussi une surface supérieure d'appui et une jupe périphérique.

Si l'on souhaite munir une telle buse d'une fente auto-obturable, la solution de réaliser une membrane à fente par bi-injection ne convient pas comme on l'a vu. D'un autre côté, si l'on réalise séparément et d'une seule pièce la buse avec une partie terminale comportant la fente auto-obturable dans un matériau suffisamment souple pour cela, se pose le problème de l'intégration de la buse à fente au corps du récipient. En effet, si on insère une telle buse simplement dans un logement du corps, il faut que les forces de rétention soient supérieures aux forces d'expulsion de la buse sous la pression de la substance fluide distribuée. Ceci entraine la nécessité de cotes dimensionnelles précises entre la buse et le logement pour assurer une bonne rétention sans déformation de la buse. Il est difficile de réaliser une telle précision dans les conditions de moulage industriel en grande série, notamment du fait de l'usure progressive des moules.

L'invention a pour but un distributeur auto-obturateur ne présentant pas de tels inconvénients et se prêtant bien à la fabrication industrielle à prix compétitifs.

L'invention a pour objet un distributeur manuel de substance fluide par pression, à obturation automatique en l'absence de pression, du type bouton-poussoir de commande de valve aérosol ou de pompe, ou bouchon de récipient à paroi souple comprimable, du type qui comporte une fente auto-obturable de distribution élastiquement déformable, intégrée de moulage dans un corps relativement rigide, caractérisé en ce que la fente est réalisée à une extrémité d'une buse monobloc constituée d'un élément tubulaire allongé, un matériau relativement souple et élastique, lequel est intégré de moulage dans ledit corps.

L'élément tubulaire est avantageusement terminé par une paroi traversée partiellement par ladite fente auto-obturable ; avantageusement cette paroi a une face intérieure en dôme, et elle peut avoir une face extérieure plane.

Il est avantageux que la fente soit formée dans une tête renflée fendue de la buse, laquelle tête est dégagée du corps et en prolonge la forme, afin de laisser libre l'élasticité du matériau de la buse, hors de la contrainte d'un enserrement du matériau rigide du corps.

Avantageusement, le corps comporte un conduit axial dans lequel débouche non axialement la buse ou un prolongement de celle-ci ; le corps comporte aussi une surface supérieure d'appui et une jupe périphérique, et est agencé pour avoir une direction de démoulage axiale.

De préférence, la buse est dirigée vers le haut et agencée de manière à former un angle obtus par rapport à ladite direction axiale, de façon à faciliter le moulage comme on le verra plus loin.

En pratique, la buse pourra être en élastomère du type éthylène-acétate de vinyle, et le corps en polymère du type polypropylène.

L'invention a aussi pour objet un procédé de fabrication d'un tel distributeur caractérisé en ce que, dans un premier temps, on moule la buse seule. puis on la transfère dans le moule de corps pour l'intégrer au corps en moulant le distributeur, et on fend l'extrémité de la buse du distributeur ainsi formé, soit dans le moule, soit en reprise.

Une meilleure compréhension de l'invention pourra résulter de la description détaillée des dessins annexés qui représentent deux modes de réalisation de l'invention choisis simplement à titre d'exemple parmi les nombreuses formes d'exécution, adaptations et variantes concevables par un technicien averti.

Sur ces dessins :
la figure 1 est une vue schématique, en coupe axiale, d'un bouton-poussoir de commande d'une valve aérosol ou d'une pompe, suivant l'invention ;
la figure 2 est une vue de face, en élévation, du bouton-poussoir de la figure 1 ;
la figure 3 est une vue de dessus du même bouton-poussoir ;
la figure 4 est une vue analogue à celle de la figure 1, d'un bouchon de récipient, suivant l'invention ;
la figure 5 représente en coupe la partie de moule utilisée pour le moulage de la buse ;
la figure 6 représente le démoulage de la buse réalisée à la figure 5 ;
la figure 7 représente la mise en place de la partie de moule utilisée pour le moulage du corps ;
la figure 8 représente le moulage du corps ;
la figure 9 représente le démoulage du corps.

Sur ces figures, les éléments correspondants sont désignés par les mêmes références numériques, éventuellement affectées d'un indice. Les dimensions et les proportions respectives de ces éléments peuvent ne pas être respectées pour une meilleure clarté des dessins.

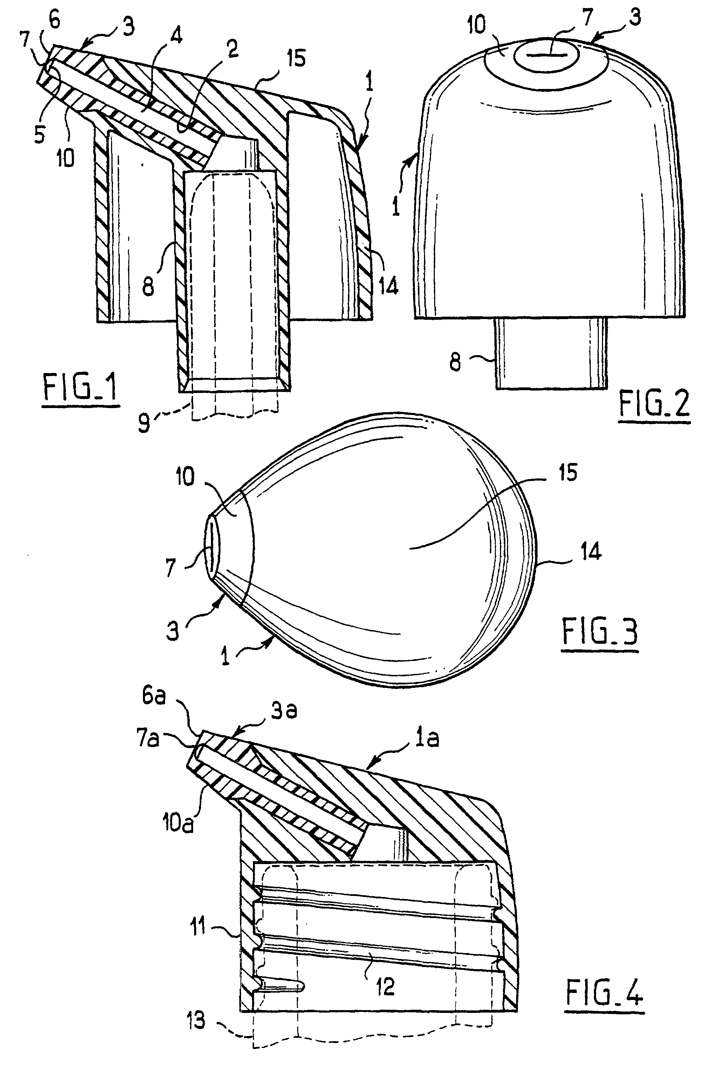

Le bouton-poussoir représenté sur les figures 1 à 3 et 5 à 9 est monobloc et formé par surmoulage d'un corps 1 relativement rigide autour de la partie inférieure 2 d'une buse 3 tubulaire allongée relativement élastique. Le canal interne 4 de la buse se termine en dôme 5 dans une paroi à face extérieure plane 6 percée d'une fente 7. L'extrémité opposée de la buse débouche dans un prolongement tubulaire axial 8 du corps 1 appelé à recevoir l'extrémité de la tige creuse 9 d'actionnement d'une valve aérosol ou d'une pompe, indiquée en trait interrompu. La partie extérieure ou tête 10 de la buse 3 est totalement dégagée du corps 1. La fente 7 ne subit ainsi pas les contraintes de l'enserrement du corps 1 et peut jouer élastiquement aux sollicitations d'une substance fluide amenée sous pression par le canal 4 pour s'ouvrir et se refermer automatiquement lorsque cesse la pression. Comme connu en soi, le corps 1 comporte une jupe périphérique plus ou moins cylindrique et éventuellement bombée 14, se raccordant en haut avec une surface d'appui 15 permettant d'exercer du doigt une pression vers le bas. Le corps est conçu pour permettre un démoulage axial.

La buse 3 est disposée obliquement vers le haut, et la surface d'appui 15 est inclinée.

Dans le bouchon représenté sur la figure 4, les éléments correspondant à ceux du bouton-poussoir des figures 1 à 3 sont désignés par les mêmes références numériques affectées de l'indice a. La jupe latérale 11 du corps la comporte des filets internes 12 appelés à coopérer avec le filetage du col 13 d'un récipient indiqué en trait interrompu.

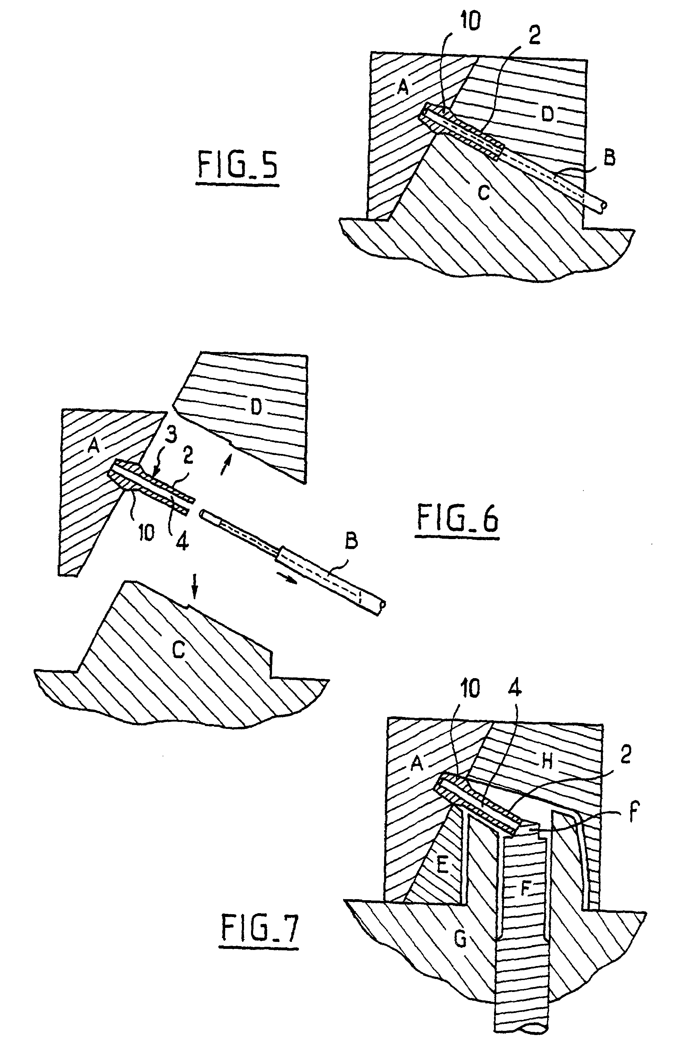

Les figures 5 à 9 illustrent la réalisation du distributeur de la figure 1.

On moule d'abord (figure 5) la buse 3 dans une première partie moulante du moule composée des parties A, C, D et B (broche ou aiguille permettant la formation du canal interne 4).

Dans un second temps (figure 6), on dégage la broche B, puis la partie C et D de moulage du bas de buse 2, en laissant la buse 3 maintenue par sa tête 10 dans la partie A.

Dans un troisième temps (figure 7), on transfère la partie A de l'outillage, avec la buse 3, dans une autre partie de zone moulante composée des parties E, F, G, et H. Le transfert peut s'effectuer par translation ou rotation dans le moule. La broche axiale F est en appui grâce à un téton adapté f contre le bas de buse 2 et en assure ainsi l'étanchéité obstruant le canal 4.

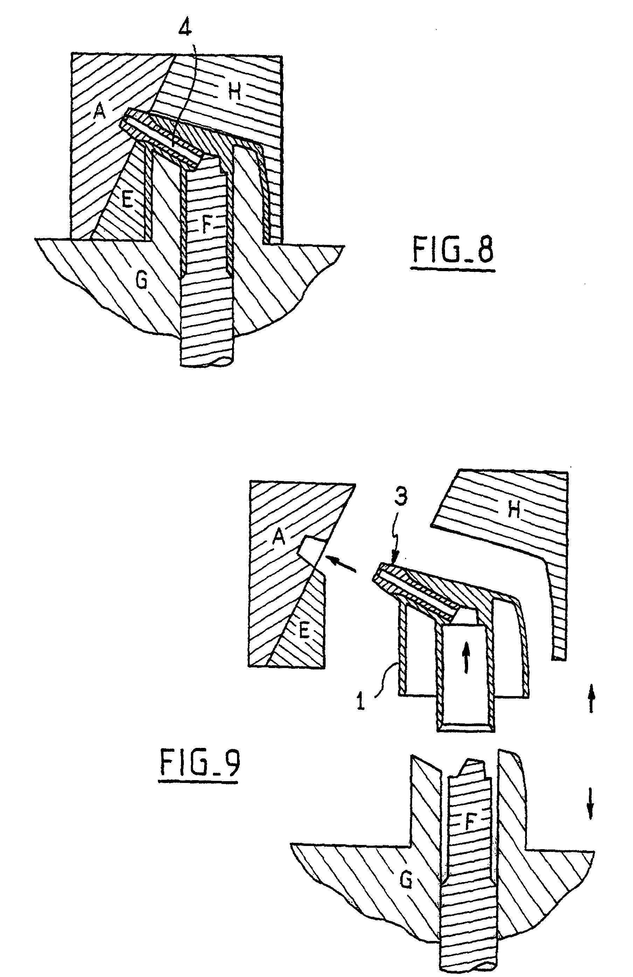

Dans un quatrième temps (figure 8), on injecte le corps 1 sans remplir la cavité 4 grâce à l'étanchéité susdite.

Enfin, le démoulage s'effectue (figure 9) par le recul de A et E, l'ouverture en direction axiale entre H et G, puis en chassant la pièce 1 des broches F et G.

## Revendications

1. Distributeur manuel de substance fluide par pression, à obturation automatique en l'absence de pression, du type bouton-poussoir de commande de valve aérosol ou de pompe, ou bouchon de récipient à paroi souple comprimable, du type qui comporte une fente auto-obturable (7) de distribution élastiquement déformable, intégrée de moulage dans un corps (1) relativement rigide, **caractérisé en ce que** la fente (7) est réalisée à une extrémité d'une buse monobloc (3) constituée d'un élément tubulaire allongé (2) en un matériau relativement souple et élastique, lequel est intégré de moulage dans ledit corps (1).

2. Distributeur selon la revendication 1, **caractérisé en ce que** l'élément tubulaire (2) est terminé par une paroi (6) traversée partiellement par ladite fente (7) auto-obturable.

3. Distributeur selon la revendication 2, **caractérisé en ce que** ladite paroi (6) a une face intérieure en dôme (5).

4. Distributeur selon l'une quelconque des revendications 2 ou 3, **caractérisé en ce que** ladite paroi (6) a une face extérieure plane.

5. Distributeur selon l'une quelconque des revendications 1 à 4, **caractérisé en ce que** la fente (7) est formée dans une tête renflée fendue (10) de la buse (3), laquelle tête est dégagée du corps (1) et en prolonge la forme.

6. Distributeur selon l'une quelconque des revendications précédentes, **caractérisé en ce que** le corps (1) comporte un conduit axial (8) dans lequel débouche non axialement la buse (7) ou un prolongement de celle-ci.

7. Distributeur selon l'une quelconque des revendications précédentes, **caractérisé en ce que** le corps (1) comporte une surface supérieure d'appui et une jupe périphérique.

8. Distributeur selon l'une quelconque des revendications 6 ou 7, **caractérisé en ce que** le corps (1) est agencé pour avoir une direction de démoulage axiale.

9. Distributeur selon les revendications 6 et 8, **caractérisé en ce que** la buse est agencée de manière à former un angle obtus par rapport à ladite direction axiale.

10. Distributeur selon l'une quelconque des revendications 1 à 9, **caractérisé en ce que** la buse (3) est en élastomère du type éthylène-acétate de vinyle et le corps (1) en polymère du type polypropylène.

11. Procédé de fabrication d'un distributeur selon l'une quelconque des revendications 1 à 10, **caractérisé en ce que**, dans un premier temps, on moule la buse seule, puis on la transfère dans le moule de corps pour l'intégrer au corps en moulant le distributeur et on fend les extrémités de la buse du distributeur ainsi formé, soit dans le moule, soit en reprise.

## Patentansprüche

1. Durch Druck handbetätigter Spender für eine flüssige Substanz mit automatischem Verschluß bei Abwesenheit von Druck, der Art mit Betätigungsdruckknopf mit Aerosol- oder Pumpventil oder mit Behälterstopfen mit biegsamer, zusammendrückbarer Wandung, der Art, die einen elastisch verformbaren, selbstschließenden Zuteilungsspalt (7) umfaßt, der durch Formen in einen relativ stairen Körper (1) integriert ist, **dadurch gekennzeichnet, daß** der Spalt (7) an einem Ende einer Düse (3) aus einem Stück ausgeführt ist, welche aus einem röhrenförmigen, länglichen Element (2) aus einem relativ biegsamen und elastischen Material besteht, welches durch Formen in den Körper (1) integriert ist.

2. Spender nach Anspruch 1, **dadurch gekennzeichnet, daß** das röhrenförmige Element (2) mit einer Wandung (6) endet, die teilweise von dem selbstschließenden Spalt (7) durchquert wird.

3. Spender nach Anspruch 2, **dadurch gekennzeichnet, daß** die Wandung (6) eine kuppelartige Innenfläche (5) aufweist.

4. Spender nach einem der Ansprüche 2 oder 3, **dadurch gekennzeichnet, daß** die Wandung (6) eine ebene Außenfläche aufweist.

5. Spender nach einem der Ansprüche 1 bis 4, **dadurch gekennzeichnet, daß** der Spalt (7) in einem bauchigen, geschlitzten Kopf (10) der Düse (3) ausgebildet ist, wobei der Kopf vom Körper (1) freiliegt und dessen Form verlängert.

6. Spender nach einem der vorangehenden Ansprüche, **dadurch gekennzeichnet, daß** der Körper (1) einen axialen Kanal (8) umfaßt, in den die Düse (7) [(3)] oder eine Verlängerung dieser nicht-axial mündet.

7. Spender nach einem der vorangehenden Ansprüche, **dadurch gekennzeichnet, daß** der Körper (1) eine obere Druckaufnahmefläche und einen Umfangsmantel umfaßt.

8. Spender nach einem der Ansprüche 6 oder 7, **dadurch gekennzeichnet, daß** der Körper (1) so konstruiert ist, daß er eine axiale Richtung zum Entnehmen aus der Form aufweist.

9. Spender nach den Ansprüchen 6 und 8, **dadurch gekennzeichnet, daß** die Düse so konstruiert ist, daß sie bezüglich der axialen Richtung einen stumpfen Winkel bildet.

10. Spender nach einem der Ansprüche 1 bis 9, **dadurch gekennzeichnet, daß** die Düse (3) aus einem Elastomer des Typs Vinylethylenacetat besteht und der Körper (1) aus einem Polymer des Typs Polypropylen besteht.

11. Verfahren zur Herstellung eines Spenders nach einem der Ansprüche 1 bis 10, **dadurch gekennzeichnet, daß** man in einer ersten Zeit nur die Düse formt, man dann diese in die Form des Körpers überführt, um sie beim Formen des Spenders in den Körper zu integrieren, und man die Enden der so ausgebildeten Düse des Spenders entweder in der Form oder bei der Entnahme schlitzt.

## Claims

1. Manual dispenser of fluid substances using pressure, which closes automatically in the absence of pressure, of the push-button for controlling an aerosol valve or pump type, or of the stopper for compressible flexible-walled container type, of the kind which has an elastically deformable self-closing dispensing slit (7) incorporated by moulding into a relatively rigid body (1), **characterized in that** the slit (7) is made at one end of a one-piece nozzle (3) made up of an elongate tubular element (2) made of a relatively flexible and elastic material, which is incorporated by moulding into the said body (1).

2. Dispenser according to Claim 1, **characterized in that** the tubular element (2) ends in a wall (6) through which the said self-closing slit (7) partially passes.

3. Dispenser according to Claim 2, **characterized in that** the said wall (6) has a dome-shaped interior face (5).

4. Dispenser according to either one of Claims 2 and 3, **characterized in that** the said wall (6) has a flat exterior face.

5. Dispenser according to any one of Claims 1 to 4, **characterized in that** the slit (7) is formed in a slit bulging head (10) of the nozzle (3), which head is clear of the body (1) and extends the shape thereof.

6. Dispenser according to any one of the preceding claims, **characterized in that** the body (1) has an axial duct (8) into which the nozzle (7) or an axial extension thereof opens non-axially.

7. Dispenser according to any one of the preceding claims, **characterized in that** the body (1) has an upper surface for pressing on and a peripheral skirt.

8. Dispenser according to either one of Claims 6 and 7, **characterized in that** the body (1) is designed to have an axial direction of release from the mould.

9. Dispenser according to Claims 6 and 8, **characterized in that** the nozzle is designed to make an obtuse angle with the said axial direction.

10. Dispenser according to any one of Claims 1 to 9, **characterized in that** the nozzle (3) is made of an elastomer of the ethylene-vinyl acetate type, and the body (1) is made of a polymer of the polypropylene type.

11. Method of manufacturing a dispenser according to any one of Claims 1 to 10, **characterized in that** the nozzle is first moulded on its own, and then transferred into the body mould so that it can be incorporated into the body when the dispenser is moulded, and the ends of the nozzle of the dispenser thus formed are then slit, either in the mould or as a separate operation.
